# EUROPÄISCHE PATENTSCHRIFT

(11) **EP 1 121 970 B1**
(45) Veröffentlichungstag und Bekanntmachung des Hinweises auf die Patenterteilung: **22.02.2006**
(21) Anmeldenummer: 01100152.6
(22) Anmeldetag: 16.01.2001
(51) Int. Cl.: B01D 61/44, B01D 61/46

(54) **Verfahren und Vorrichtung zum gleichzeitigen Herstellen von Säure und Base hoher Reinheit**
Method and apparatus for the simultaneous production of high purity acids and bases
Procédé et dispositif de production simultanée d'acides et de bases de haute pureté

(30) Priorität: 04.02.2000 DE 10004878
(43) Veröffentlichungstag der Anmeldung: 08.08.2001
(73) Patentinhaber: SGL CARBON AG, 65203 Wiesbaden (DE)
(72) Erfinder: Härtel, Georg, Prof. Dr. Ing. habil, 09599 Freiberg (DE); Bienhüls, Chritian, Dipl.-Ing., 86405 Meitingen-Ostendorf (DE); Künzel, Jürgen, Dr.-Ing., 86672 Thierhaupten (DE)

(56) Entgegenhaltungen:
- EP-A- 0 522 382
- BE-A- 1 004 126
- DE-A- 4 201 494
- DE-B- 1 211 597

## Beschreibung

Die Erfindung betrifft ein Verfahren zum gleichzeitigen Herstellen von Säure und Base hoher Reinheit mittels elektrodialytischen Spaltens des korrespondierenden Salzes in wässeriger Lösung unter Anwendung einer Elektrodialysezelle und eine Elektrodialysezelle zum Durchführen des Verfahrens.

Bei einer Anzahl chemischer Verfahrensschritte fallen Salzlösungen an, die als solche nicht direkt weiterverwendet oder die auch nicht als Abfall in einen Vorfluter eingeleitet werden können oder sollten. Salzlösungen mit hohen Konzentrationen werden desweiteren bei Laugungsprozessen von Salzlagerstätten oder beim Auslaugen von bereits geförderten und auch von reinen, aufbereiteten Salzen erhalten. In vielen Fällen liegt es im verfahrenstechnischen und wirtschaftlichen Interesse, aus solchen Salzlösungen höher veredelte Wertstoffe in Form von den Ionen des jeweiligen Salzes korrespondierenden Säuren und Basen herzustellen. Dazu bedient man sich häufig elektrolytischer oder elektrodialytischer Verfahren. Die bekannten elektrodialytischen Verfahren hierzu arbeiten mit einem Dreikammersystem (siehe Mitteilung der Fraunhofergesellschaft: Institut für Grenzflächen- und Bioverfahrenstechnik, April 1999, Elektrodialyse mit bipolaren Membranen).

Dabei wird die Salzlösung, die elektrodialytisch aufbereitet werden soll, durch die mittlere Kammer einer aus drei Kammern bestehenden Elektrodialysezelle geleitet. Von dieser aus wandern die Kationen unter dem Einfluß des elektrischen Feldes durch eine Kationenaustauschermembran in die benachbarte Kammer, die die Kathode enthält und bilden dort mit den kathodisch entwickelten OH⁻-Ionen die Base. Entsprechend wandern die Anionen durch eine Anionenaustauschermembran in die auf der anderen Seite benachbarte Anodenkammer und bilden mit den dort anodisch entwickelten H'-Ionen die korrespondierende Säure. Die nach diesem Verfahren arbeitenden Gewinnungsverfahren von Säuren und Basen aus Salzlösungen haben jedoch Nachteile. Ein Nachteil besteht darin, daß an der Anode unerwünschte Reaktionen mit Anionen ablaufen, die zum Verunreinigen der gebildeten Säure führen. So werden beispielsweise in der Anodenkammer gebildete Halogenwasserstoffsäuren mit freien Halogenen, die an der Anode durch Entladen von Halogenidionen entstehen, verunreinigt und damit in ihrem Gebrauchswert gemindert. Außerdem kann durch das freigesetzte Halogen die Anode korrosiv angegriffen oder es können die Ionenaustauschermembranen geschädigt werden.
Ein anderer Nachteil besteht darin, daß die anodisch gebildeten Säuren häufig nicht genügend konzentriert und damit von geringem verfahrenstechnischem und kommerziellem Wert sind.

In US 4,212,712 ist ein Verfahren zum elektrodialytischen Herstellen von höher konzentrierter Natronlauge aus Natriumchloridlösungen in einer Drei-Kammerzelle beschrieben. Bei diesem verfahren wird jedoch nicht Salzsäure direkt elektrodialytisch gebildet, sondern statt dessen anodisch Chlor abgeschieden. Die zwischen der Anodenkammer und der Kathodenkammer liegende Zwischenkammer ist von beiden benachbarten Kammern durch Kationenaustauschermembranen getrennt, die neben der Durchlässigkeit für die Na⁺-Ionen unterschiedlich durchlässig für Wasser sind. Die Permeabilität für Wasser ist zum Kathodenraum hin schlechter als diejenige vom Anodenraum in die Zwischenkammer. Durch diese Anordnung gelingt es, in der Zelle eine vergleichsweise konzentrierte Natronlauge zu erzeugen. In der Literaturstelle wird auch erwähnt, dass es grundsätzlich möglich wäre, anstelle einer Zwischenkammer zwei oder mehr solcher Zwischenkammern zu verwenden, die in Richtung auf die Kathodenkammer mit Kationenaustauschermembranen ausgerüstet sind, die zunehmend schlechter wasserdurchlässig sind. Dadurch soll die Natronlauge in der Kathodenkammer noch mehr konzentriert werden. In der Praxis wird eine solche Lösung wegen der damit verbundenen Schwierigkeiten, einen zufriedenstellenden Stromwirkungsgrad zu erreichen, jedoch nicht angewendet.

BE 1 004 126 A offenbart eine Elektrodialysezelle zur Herstellung von Alkalilauge und Salz-säure aus einer wässrigen Lösung eines Alkalimetallchlorids, umfassend:
- eine Kathodenkammer, aus der die Alkalilauge abgeführt wird, mit einer Kathode
- eine für Kationen permeable Wand (selektiv für Kationen permeable Membran oder für wässrige Lösungen permeables Diaphragma)
- eine Zwischenkammer, in welche eine wässrige Lösung eines Alkalimetallchlorids eingeleitet wird
- eine selektiv für Anionen permeable Membran
- eine weitere Zwischenkammer, aus der die entstehende Salzsäure abgeführt wird
- eine selektiv für Kationen permeable Membran
- eine Anodenkammer, in welche eine wässrige Lösung eines nicht halogenidhaltigen Elektrolyten, z.B. Schwefelsäure, eingeleitet wird, mit einer konventionellen Anode

Mit dieser Zelle lässt sich Natronlauge mit einer Konzentration von 25 bis 40 Gew.% herstellen, zur Konzentration der erhaltenen Salzsäure werden keine Angaben gemacht.

EP 0 522 382 A1 offenbart (Figur 5) eine Elektrodialysezelle zur Herstellung von Lauge und Säure aus einer wäßrigen Salzlösung, umfassend
- eine Kathodenkammer mit einer Kathode
- eine Kationenaustauschermembran
- eine mittlere Kammer mit einem elastischen Abstandshalter, um die die Kammer begrenzenden Membranen in der gewünschten Distanz zu halten
- eine Anionenaustauschermembran
- eine Kammer, in welcher Säure gebildet wird, mit einem elastischen Abstandshalter, um die die Kammer begrenzenden Membranen in der gewünschten Distanz zu halten
- eine Wasserstoffverzehranode umfassend eine Kationenaustauschermembran, eine poröse flexible elektrokatalytisch aktive Schicht und einen starren Stromabnehmer, die durch den Anpressdruck zusammengehalten werden, und
- eine Wasserstoffkamtaer zur Versorgung der Wasserstoffverzehranode mit Wasserstoff.

Mit dieser Zelle wurde bei der Elektrodialyse einer Natriumchloridlösung mit einer Konzentration von 20 Gew.% Salzsäure mit einer Konzentration von 2 Gew.% erhalten.

Es war die Aufgabe der dieser Patentanmeldung zugrundeliegenden Erfindung, ein Verfahren zum gleichzeitigen Herstellen von Säure und Base mittels elektrodialytischen Spaltens des korrespondierenden Salzes in wässeriger Lösung unter Anwenden einer Elektrodialysezelle zu schaffen, mit dem unerwünschte Anodeneffekte vermieden und Säuren und Laugen mit vergleichsweise hohen Konzentrationen und hoher Reinheit hergestellt werden können. Insbesondere war es die Aufgabe, nach dem erfindungsgemäßen Verfahren aus Natriumchloridlösungen Salzsäure in hoher Reinheit und in Konzentrationen herzustellen, die bisher auf elektrodialytischem Wege in technischem Maßstab nicht zugänglich waren.
Desweiteren war es die Aufgabe, eine Elektrodialysezelle zu schaffen, mit der das im ersten Teil der Aufgabenstellung definierte Verfahren durchgeführt werden kann.

Die Aufgabe wird gelöst durch eine Elektrodialysezelle zur Zerlegung eines in Wasser gelösten, Chlorid-Ionen enthaltenden Salzes in Chlorwasserstoffsäure und die das Kation des Salzes enthaltende Base, wobei die Zelle folgenden Komponenten aufweist:
- Einrichtungen zum Anlegen einer elektrischen Spannung zwischen Anode und Kathode;
- eine Kathodenkammer (2), in welcher die das Kation des Salzes enthaltende Base gebildet wird, mit einer Kathode (6);
- eine an die Kathodenkammer (2) angrenzende Salzkammer (3), welcher eine wässrige Lösung eines Chlorid-Ionen enthaltenden Salzes zugeführt wird;
- eine an die Salzkammer (3) angrenzende Säurekammer (4), in welcher Chlorwasserstoffsäure mit einer Konzentration von mindestens 10 Gewichtsprozent, bevorzugt mindestens 20 Gewichtsprozent gebildet wird;
- eine an die Säurekammer (4) angrenzende Anodenkammer (5), welcher ein keine Halogenid-Ionen enthaltender wässriger Protonenträger zugeführt wird, mit einer Wasserstoffverzehranode (20) mit einer Masserstoffzuführung (23);
   wobei jede dieser Kammern je eine Einström- und eine Ausströmöffnung aufweist; sowie
- eine Kationenaustauschermembran (11), welche die Kathodenkammer (2) von der angrenzenden Salzkammer . (3) trennt;
- eine Anionenaustauschermembran (14), welche die Salzkammer (3) von der angrenzenden Säurekammer (4) trennt;
- eine Kationenaustauschermembran (17), welche die Säurekammer (4) von der angrenzenden Anodenkammer (5) trennt; und
- eine weitere Kationenaustauschermembran (21), welche die aktive Schicht der Wasserstoffverzehranode von der wässrigen Lösung des Protonenträgers in der Anodenkammer (5) trennt.

Die Aufgabe wird weiterhin gelöst durch ein Verfahren zum Zerlegen eines in Wasser gelösten, Chlorid-Ionen enthaltenden Salzes in Chlorwasserstoffsäure mit einer Konzentration von mindestens 10 Gewichtsprozent, bevorzugt 20 Gewichtsprozent und die Kationen des Salzes enthaltende Base durch Elektrodialyse, dadurch gekennzeichnet, dass die vorstehend beschriebene Elektrodialysezelle benutzt wird.

Die Unteransprüche geben vorteilhafte Ausgestaltungen der erfinderischen Lösung wieder.

Durch das Einführen einer vierten Kammer in die bekannte Drei-Kammerzelle wird die Kammer, in der die Säure gebildet wird, vom Anodenraum durch eine Kationenaustauschermembran getrennt. Damit wird vermieden, dass Bestandteile, die sich in der Kammer befinden, in der die Säure gebildet wird und die an der Anode elektrochemische Reaktionen eingehen könnten, an die Anode gelangen und dort zu störenden Verunreinigungen, die in der Säure verbleiben, umgesetzt werden. Ein Beispiel für eine derartige Verunreinigung ist elementares, gelöstes Chlor, das durch Entladen von Chloridionen an der Anode gebildet werden kann. Ganz allgemein können mit der vorgeschlagenen Anordnung sehr reine Säuren hergestellt werden, weil durch die ionenselektiv wirkenden Membranen in den Raum, in dem die Säure gebildet wird, nur die Substanzen gelangen können, die durch die Kationenaustauschermembran aus der Anodenkammer und die durch die Anionenaustauschmembran aus der mittleren, salzführenden Kammer hindurchtreten können. Außerdem wird wie die Versuche gezeigt haben, bei der neuen Anordnung die Standzeit der Anode um ein mehrfaches erhöht.

Mit der erfindungsgemäßen Lösung ist es überraschender Weise auch erstmals auf elektrodialytischem Wege möglich, in technischem Maßstab Salzsäure herzustellen, deren Konzentration über 10 Gewichtsprozent HCl in der Säure beträgt. Bemühungen der Erfinder, reine Salzsäure mit Konzentrationen über 10 Gew.-% HCl mit herkömmlichen Drei-Kammer-Anlagen zu erhalten, waren fehlgeschlagen. Mit dem neuen Zellenaufbau ist es nun möglich, Salzsäure mit Konzentrationen bis über 20 Gew.-% HCl in der Salzsäure und gleichzeitig Natronlauge mit Konzentrationen über 30 Gew.-% NaOH in der Lauge herzustellen.
Das Verfahren kann auch mit zwei oder mehr parallel geschalteten Elektrodialysezellen durchgeführt werden.
Besonders effektiv arbeitet das Verfahren, wenn zwei oder mehr Elektrodialysezellen hintereinander geschaltet sind.

Zum Durchführen des Verfahrens wird die Lösung eines Salzes, beispielsweise die wässerige Lösung von NaCl, NaBr, KCl, KBr, KNO₃, NaNO₃ oder einem Acetat, die vorzugsweise etwas angesäuert ist, in die Kammer der Elektrodialysezelle geleitet, die auf der einen Seite von einer Kationenaustauschermembran und auf der anderen Seite von einer Anionenaustauschermembran begrenzt ist. An die Kationenaustauschermembran schließt sich die Kammer an, die die Kathode enthält und in der die Base oder Lauge gebildet wird. An die Anionenaustauschermembran schließt sich die Kammer an, in der die Säure gebildet wird. Diese Kammer enthält jedoch keine Anode. Die Anode befindet sich in einer weiteren, vierten Kammer, die sich an die Kammer anschließt, in der die Säure gebildet wird. Beide letztgenannten Kammern sind durch eine Kationenaustauschermembran getrennt. Wenn die Salzlösung die Kammer passiert, in die sie eingeleitet worden ist, treten ständig Kationen des in ihr gelösten Salzes durch die Kationenaustauschermembran in die Kathodenkammer der Zelle über. Die Kathode kann aus jedem Material bestehen, das gegen Laugen beständig ist und das für die Reaktion

2 H₂O + 2 e⁻ --- H₂ + 2 OH⁻

geeignet ist. Derartige Elektroden sind im Handel erhältlich und bestehen beispielsweise aus Nickel oder aus Titan und sind mit Edelmetalloxiden aus der Gruppe Pt, Pd, Rh, Ru, Ir, Re, Au oder mit Titanoxiden aktiviert. Vorteilhafterweise haben die verwendeten Kathoden eine möglichst geringe Überspannung für die obengenannte Reaktion zur Bildung von Wasserstoff. Als besonders vorteilhaft hat sich eine ohne Zusatz von Fremdelementen oder -Oxiden aktivierte, käufliche Nickelkathode erwiesen. In der Kathodenkammer befindet sich eine verdünnte wässerige Lösung der Base. Ein Teil des Wassers der Lösung wird an der Kathode in dem Maße in Hydroxylionen und Wasserstoff gespalten wie Kationen in die Kathodenkammer eintreten. Zusammen mit den Hydroxylionen bilden die Kationen die Base. Durch diesen Vorgang wird die verdünnte Lösung aufkonzentriert. Die Lauge wird kontinuierlich aus der Kathodenkammer abgezogen. Der ebenfalls entwickelte Wasserstoff wird gefaßt und von der Kathodenkammer über eine Rohrleitung der als Wasserstoffverzehranode ausgebildeten Anode für das Umwandeln in positiv geladene Wasserstoffionen, im folgenden Protonen genannt, zugeführt. In dem Maße wie positive Ladungen in Form von Kationen in die Kathodenkammer übertreten, treten negative Ladungen in Form von Anionen des Salzes durch die Anionenaustauschermembran in die Kammer über, in der die Säure gebildet wird. Diese Kammer wird von einer verdünnten Protonensäure durchströmt. Diese Protonensäure ist durch das Anion gekennzeichnet, das auch das Anion des Salzes ist, das elektrodialytisch gespalten werden soll. Die Protonen, die für das Bilden der Säure benötigt werden, treten in dem Maße von der Anodenkammer durch die Kationenaustauschermembran in die Kammer ein, in der die Säure gebildet wird wie Anionen in diese Kammer eintreten. Durch diesen Säurebildungsprozeß wird die zunächst in der Kammer vorhandene, verdünnte Säure aufkonzentriert. In dem Maße wie Protonen in die Kammer wandern, in der die Säure entsteht, wird an der Wasserstoffverzehranode die entsprechende Anzahl an Protonen aus Wasserstoff gebildet.
Als Anode könnte jede käufliche Anode verwendet werden, die dazu geeignet ist, aus Wasser Protonen zu erzeugen. Es werden jedoch depolarisierte Wasserstoffverzehrelektroden verwendet, mit Hilfe derer aus gasförmigem Wasserstoff Protonen erzeugt werden können. Bei Anwendung dieses Anodentyps kann mit einer niedrigeren Zellenspannung gefahren werden, da bei der Umwandlung von Wasserstoff in Protonen nur das Normalwasserstoffpotential von 0 Volt zugrundeliegt, während bei wasserzersetzenden Anoden das höhere Potential von + 1,21 V für die Reaktion 2 H₂O -- 4 H⁺ + O₂ zugrundeliegt. Geeignete Gasdiffusionsanoden sind käuflich erhältlich (z.B. von Fa. E-TEK, Inc., Natick, Massachusetts, USA). In der Anodenkammer befindet sich als Transportmedium für die Protonen eine verdünnte, gut dissoziierbare Protonensäure, vorzugsweise eine Säure aus der Gruppe Schwefelsäure, Perchlorsäure, Phosphorsäure. Diese Säure wird nicht verbraucht. Es ist dennoch vorteilhaft sie umzupumpen. Als Kationenaustauschermembranen werden bevorzugt Membranen aus einem mit einem anionischen Liganden wie z.B. der Sulfonsäuregruppe dotierten Polymeren oder Copolymeren, das aus Monomeren aus der Gruppe Tetrafluorethylen, Hexafluorpropylen, Monochlortrifluorethylen, Vinylidenfluorid und alpha-beta-beta-Trifluorstyrol hergestellt worden ist, verwendet. Derartige Membranen sind unter der Markenbezeichnung Nafion (Inhaber Du Pont) im Handel erhältlich. Für die vorliegende Erfindung hat sich die Verwendung von Nafion 117 für die Kationenaustauschermembran zwischen der Anodenkammer und der Kammer, in der die Säure gebildet wird und von Nafion 324 für die Kationenaustauschermembran, die die salzführende Kammer von der Kathodenkammer trennt, als vorteilhaft erwiesen. Die Erfindung ist jedoch nicht auf die Verwendung der genannten Typen von Kationenaustauschermembranen beschränkt. Es können auch andere Typen von Kationenaustauschermembranen wie beispielsweise Nafion 115, Fumatec FKF, FKC, FKL und FKE oder Tokuyama Soda CMS, CIMS, CM-2 oder Asahi Class Selemion CAV, CSV verwendet werden. Als Anionenaustauschermembran zwischen der salzführenden Kammer und der Kammer, in der die Säure gebildet wird, werden ebenfalls käufliche Membranen eingesetzt. Als vorteilhaft hat sich die Membran ACM von Tokuyama Soda erwiesen. Es können aber auch andere Membranen wie beispielsweise die Membranen AHA, AMH und ACS von Tokuyama Soda, oder die Qualitäten FAB und FAA von der Firma Fumatec oder die Membranen PCAPC Acid 35 und PC Acid 35 PEEK von der Firma PCA GmbH oder die Membran AAV von Asahi Glass Selemion oder von Morgan die Membran ARA verwendet werden. Die Zellenspannung beim Durchführen des Verfahrens hängt neben den zu beachtenden Normalpotentialen und Überspannungseffekten auch von der Zellenkonstruktion ab. Sie liegt im Bereich von 1,5 bis 6 V. Es ist vorteilhaft, die Prozeßtemperatur auf 40°C oder mehr, vorzugsweise auf 80°C einzustellen. Es ist selbstverständlich auch möglich, nach dem erfindungsgemäßen Verfahren auch Säuren und Laugen aus Salzen wie beispielsweise Na₂SO₄, NaHSO_{4,} oder Phosphaten, die bereits jetzt nach dem bekannten Drei-Kammer-Verfahren elektrodialysiert werden, herzustellen.

Im folgenden wird die Erfindung anhand von lediglich schematischen Darstellungen beispielhaft weiter beschrieben.

Es zeigen:
- Figur 1,: eine Elektrodialysezelle gemäß der Erfindung;
- Figur 2,: ein Schemabild zum Durchführen des Verfahrens;
- Figur 3,: ein Schemabild, das die Kopplung des erfindungsgemäßen Verfahrens mit einem Aufkonzentrierungsverfahren für den Fall der Herstellung von Salzsäure veranschaulicht.

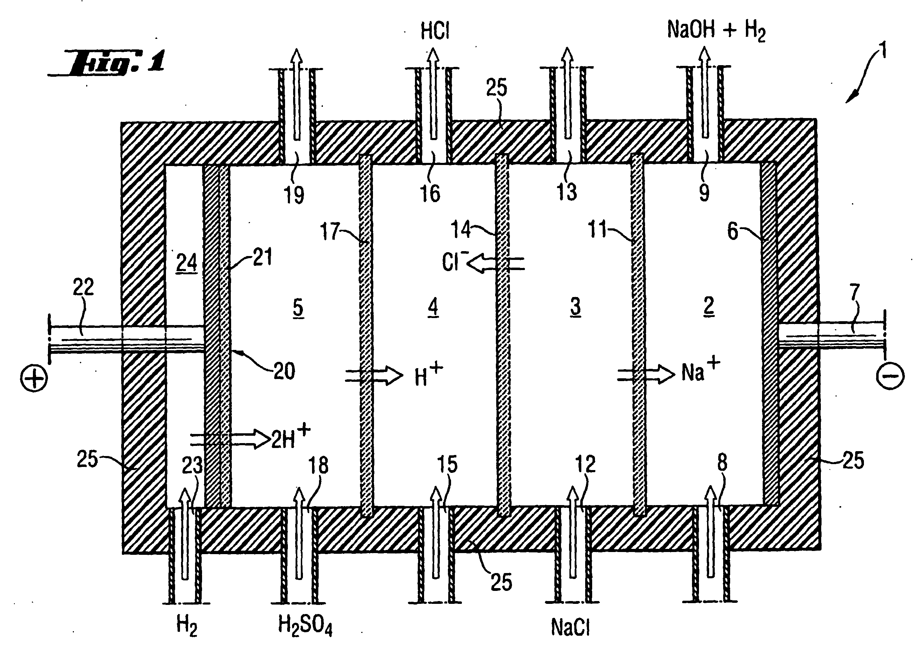

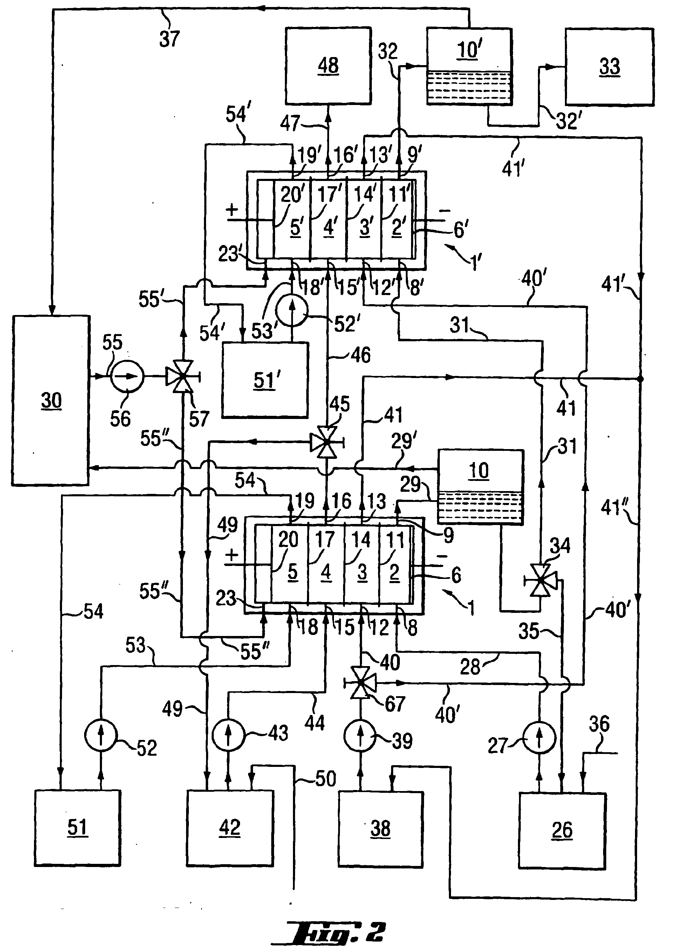

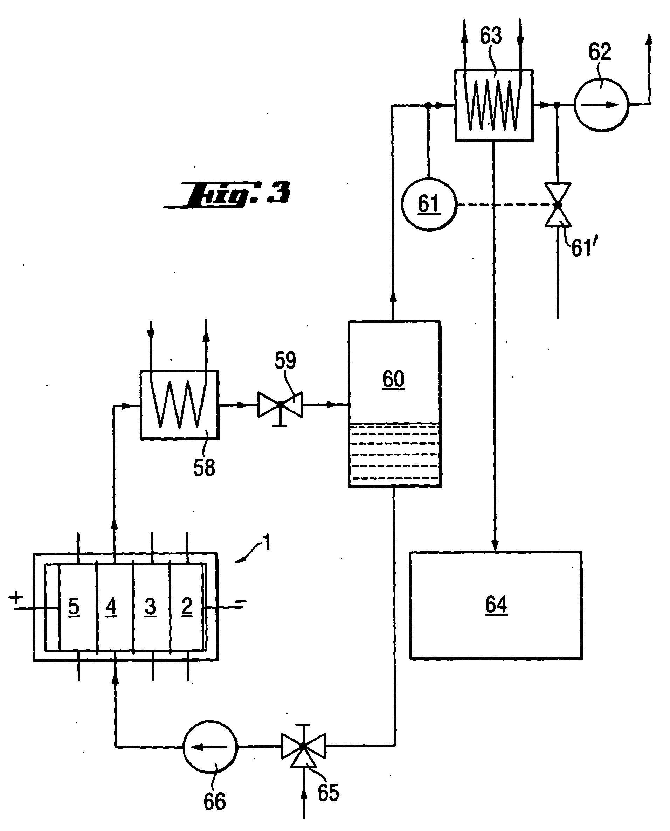

Die Wirkungsweise der Elektrodialysezelle der Figur 1 und die Verfahrensschemata der Figuren 2 und 3 werden anhand der Gewinnung von Salzsäure und Natronlauge aus Natriumchlorid beispielhaft beschrieben. Die Erfindung ist jedoch nicht auf diesen Fall beschränkt.

Die Elektrodialysezelle 1 der Fig. 1 weist vier Kammern, nämlich eine Kathodenkammer 2, eine von Natriumchloridlösung durchströmte Kammer 3, im folgenden kurz "Salz-Kammer" 3 genannt, eine Kammer 4, in der Salzsäure gebildet wird, im folgenden "Säurekammer" 4 genannt und eine Anodenkammer 5 auf. Die Kathodenkammer 2 hat eine Kathode 6 mit einem Kontaktbarren 7 für das Zuleiten des elektrischen Stromes. Die Kathode 6 besteht aus Nickel. Sie hat eine aktivierte Nickeloberfläche. Der Kontaktbarren 7 besteht ebenfalls aus Nickel. In der Kathodenkammer 2 wird einerseits Wasser elektrolytisch zu Hydroxylionen und Wasserstoff gespalten und andererseits Natronlauge aus den Hydroxylionen und Natriumionen gebildet. Die Flüssigkeit, die elektrolysiert werden soll, tritt über die Einlauföffnung 8 in die Kathodenkammer 2 ein. Diese Flüssigkeit kann Wasser sein. Vorzugsweise wird jedoch eine verdünnte Lauge, hier Natronlauge, verwendet. Die gebildete oder die durch den Natronlaugebildungsprozeß aufkonzentrierte Natronlauge verläßt zusammen mit dem gebildeten Wasserstoff die Kathodenkammer 2 durch die Auslaßöffnung 9. Die Kationen, d.h. im vorliegenden Beispiel die Natriumionen treten aus der Salz-Kammer 3 durch die Kationenaustauschermembran 11 in die Kathodenkammer 2 ein. Die Salz-Kammer 3 wird von der Lösung des Salzes durchströmt, das elektrodialytisch gespalten werden soll. Im vorliegenden Fall ist dies eine konzentrierte Lösung von Natriumchlorid. Die NaCl-Lösung tritt durch die Einlaßöffnung 12 in die Salz-Kammer 3 ein und verläßt diese 3 nach erfolgter Abreicherung an Na⁺- und Cl⁻-Ionen durch die Auslaßöffnung 13. In dem Maße wie Kationen durch die Kationenaustauschermembran 11 in die Kathodenkammer 2 wandern, treten Chloridionen aus der Salz-Kammer 3 durch die Anionenaustauschermembran 14 in die Säurekammer 4 über, wo sie mit Protonen Salzsäure bilden. In die Säurekammer 4 wird durch die Einlaßöffnung 15 Wasser oder vorzugsweise eine verdünnte Salzsäure eingeleitet, die dann durch den Salzsäurebildungsprozeß aufkonzentriert wird und die Kammer 4 durch die Auslaßöffnung 16 verläßt. Die Protonen für den Prozeß der Bildung von Salzsäure stammen aus der Anodenkammer 5, in der sie gebildet werden. Sie treten von der Anodenkammer 5 durch die Kationenaustauschermembran 17 in die Salzsäurekammer 4 ein. Die Anodenkammer 5 wird von einer verdünnten Protonensäure, im vorliegenden Falle Schwefelsäure oder Perchlorsäure durchströmt. Die Säure tritt durch die Einlaßöffnung 18 in die Anodenkammer 5 ein und verläßt sie durch die Auslaßöffnung 19. Diese Säure wird praktisch nicht verbraucht. Sie dient lediglich als Transportmittel für die Protonen, die an der Wasserstoffverzehranode 20 aus Wasserstoff produziert werden. Dazu wird der Wasserstoffverzehranode gasförmiger Wasserstoff über die Zuleitung 23 in den Verteilerraum 24, der aus einem dünnen, gekammerten Fasernetzwerk besteht, zugeführt. Unter Elektronenentzug findet dann in der Anode die Umwandlung in einfach positive Wasserstoffionen statt. Die Wasserstoffverzehranode 20 ist depolarisiert und wird auf ihrer, der Kammer 5 zugekehrten Seite von einer Kationenaustauschermembran 21 begrenzt. Die Stromabführung ist hier durch den Barren 22 symbolisiert. Die depolarisierte Wasserstoffverzehranode 20 ist über den Handel beziehbar. Die Wände 25 der Kammern 2, 3, 4, 5 der Elektrodialysezelle 1 bestehen aus einem Material, das gegen die in ihnen befindlichen Medien beständig ist. Bevorzugt werden hierfür Kunststoffe wie beispielsweise Polyvinylchlorid, Polypropylen, Polyvinylidenfluorid, Polytetrafluorethylen oder andere per- oder teilfluorierte Kunststoffe, die auch durch eingelegte Fasern oder Faserverbünde verstärkt sein können oder auch mit einem der genannten Kunststoffe ausgekleidete Metall-, vorzugsweise Stahlteile und gummierter Stahl verwendet. Im vorliegenden Fall bestanden die Wände 25 der Zelle 1 aus Polypropylen, das in Form von hier nicht dargestellten, in Paßform zugearbeiteten Blöcken und Platten aneinander gefügt war und durch hier ebenfalls nicht dargestellte Zuganker zusammengehalten wurde.

Im Verfahrensfließbild der Figur 2 sind zwei Elektrodialysezellen 1, l' hintereinandergeschaltet. Beide Zellen 1, l' entsprechen in ihrem Aufbau der anhand der Fig. 1 beschriebenen Zelle. Das Hintereinanderschalten von zwei oder mehr Elektrodialysezellen wird bei dem erfindungsgemäßen Verfahren vorteilhaft angewendet, weil der Konzentrierungseffekt in nur einer Elektrodialysezelle vergleichsweise gering ist und durch ein Hintereinanderschalten ein Maximum des Konzentrierungseffektes sowohl bei der Säure- als auch bei der Basebildung erreicht werden kann. Selbstverständlich kann auch mit nur einer Elektrodialysezelle gearbeitet werden. In diesem Falle ist es jedoch vorteilhaft, die Säure oder die Lauge oder, wo es notwendig ist, beide solange im Kreisverfahren durch die Zelle zu führen, bis in der Vorlage die gewünschte Konzentration erreicht ist.
Im vorliegenden Fall wird zunächst aus dem zwischen- und Pufferbehälter 26 eine verdünnte Natronlauge mittels der Pumpe 27 über die Rohrleitung 28 und die Einlaßöffnung 8 in die Kathodenkammer 2 der Elektrodialysezelle 1 gepumpt. In dieser Kammer 2 wird die Lauge durch die katholytische Bildung von OH⁻ -Ionen und durch das Eindiffundieren von Na⁺-Ionen aus der Salz-Kammer 3, d.h. durch Neubildung von Lauge, bis zu einem gewissen Grade aufkonzentriert. Parallel dazu entsteht an der Kathode 6 Wasserstoff, der zusammen mit der Natronlauge durch die Auslaßöffnung 9 und die Rohrleitung 29 in den Trennbehälter 10 gelangt. Von dort 10 wird der Wasserstoff über die Rohrleitung 29' in den Vorrats- und Pufferbehälter für Wasserstoff 30 gefördert. Aus dem Trennbehälter 10 gelangt die nur teilweise aufkonzentrierte Lauge in den Dreiwegeschieber 34 und von diesem aus fließt ein größerer Teilstrom durch die Rohrleitung 31 sowie die Einlaßöffnung 8' in die Kathodenkammer 2' der Elektrodialysezelle 1'. In dieser Kathodenkammer 2' wird die Lauge durch den vorbeschriebenen Prozeß weiter aufkonzentriert und danach durch die Auslaßöffnung 9' und die Rohrleitung 32 in den Trennbehälter 10' und von dort durch die Rohrleitung 32' in den Auffang- und Lagerbehälter 33 für die fertig aufkonzentrierte Lauge gefördert. Der in dieser Kathodenkammer 2' entwickelte Wasserstoff gelangt zusammen mit der Natronlauge in den Trennbehälter 10' und von dort über die Rohrleitung 37 in den Vorrats- und Pufferbehälter für Wasserstoff 30. Der andere, kleinere Teilstrom der in der ersten Kathodenkammer 2 teilweise aufkonzentrierten Lauge wird an Dreiwegeschieber 34 abgezogen und über die Rohrleitung 35 in den Zwischen- und Pufferbehälter 26 zurückgeführt. Dort wird der zurückgeführten Lauge über die Rohrleitung 36 so viel Wasser zugesetzt wie an Volumen fertig aufkonzentrierte Lauge aus der zweiten Kathodenkammer 2' abgeflossen ist. Auf diese Weise bleibt der in den Kathodenkammern 2, 2' ablaufende Prozeß zum Bilden von Natronlauge und zum Aufkonzentrieren dieser Lauge im verfahrenstechnischen Gleichgewicht.
Die Natriumionen, die für das Bilden der Natronlauge benötigt werden, stammen aus einer Natriumchloridlösung, die aus dem Zwischen- und Puffergefäß 38 über die Rohrleitungen 40, 40' mittels der Pumpe 39 durch die Einlaßöffnungen 12, 12' in die Salz-Kammern 3, 3' gepumpt wird. Damit auch die nachgeschaltete Kammer 3', was vorteilhaft ist, mit einer Salzlösung von der gleichen, möglichst hohen Konzentration wie sie sich in der ersten Kammer 3 befindet, durchströmt wird, wird der Strom der Salzlösung nach der Pumpe 39 mittels des Dreiwegeschiebers 67 in zwei gleiche Ströme geteilt, von denen der eine über die Rohrleitung 40 in die Salz-Kammer 3 und der andere über die Rohrleitung 40' in die Salz-Kammer 3' der nachgeschalteten Zelle 1' geleitet wird. In beiden Kammern 3, 3' findet ein Abreichern der Salzlösung durch elektrodialytisches Trennen des Salzes in einerseits Na⁺-Ionen, die durch die Kationenaustauschermembranen 11, 11' in die Kathodenräume 2, 2' wandern und andererseits in Cl⁻-lonen, die durch die Anionenaustauschermembranen 14, 14' in die Säurekammern 4, 4' der beiden hintereinandergeschalteten Elektrodialysezellen 1, 1' migrieren, statt. Die teilentsalzten Lösungen verlassen die Salz-Kammern 3, 3' über die Auslaßöffnungen 13, 13' und werden über die Rohrleitungen 41, 41', 41" in das Zwischen- und Puffergefäß 38 zurückgeleitet. Dort strömen sie über ein Salzbett und werden wieder aufkonzentriert. Danach wird die Salzlösung erneut im Kreislauf durch die Salz-Kammern 3, 3' geführt.

Die Salzlösung kann, falls dies notwendig sein sollte, was jedoch nicht dargestellt worden ist, auch nacheinander durch beide Kammern 3, 3' und dann zurück in den Behälter 38 geleitet werden.

Zum Erzeugen der Salzsäure wird aus dem Zwischen- und Pufferbehälter 42 eine verdünnte Salzsäure mittels der Pumpe 43 über die Rohrleitung 44 und die Einlaßöffnung 15 in die Säurekammer 4 der Elektrodialysezelle 1 gepumpt. In dieser Kammer 4 wird Salzsäure aus den von der Salz-Kammer 3 durch die Anionenaustauschermembran 14 eingedrungenen Chloridionen und aus den durch die Kationenaustauschermembran 17 aus der Anodenkammer 5 eingewanderten Protonen neu gebildet und die verdünnte Salzsäure bis zu einem gewissen Grade aufkonzentriert. Die nur teilweise aufkonzentrierte Säure verläßt die Säurekammer 4 über die Auslaßöffnung 16 und es gelangt ein größerer Teilstrom davon über den Dreiwegeschieber 45 und die Rohrleitung 46 sowie die Einlaßöffnung 15' in die Säurekammer 4' der Elektrodialysezelle 1'. In dieser Säurekammer 4' wird die Säure durch den vorbeschriebenen Prozeß weiter aufkonzentriert und danach durch die Auslaßöffnung 16' und die Rohrleitung 47 in den Auffang- und Lagerbehälter 48 für die fertig aufkonzentrierte Salzsäure gefördert. Der andere, kleinere Teilstrom der teilweise aufkonzentrierten Säure wird am Dreiwegeschieber 45 abgezogen und über die Rohrleitung 49 in den Zwischen- und Pufferbehälter 42 zurückgeführt. Dort wird der zurückgeführten Salzsäure über die Rohrleitung 50 so viel Wasser zugesetzt wie es die Wasserbilanz der Zelle erfordert. Auf diese Weise bleibt der in den Säurekammern 4, 4' ablaufende Prozeß zum Bilden von Salzsäure und zum Aufkonzentrieren dieser Säure im verfahrenstechnischen Gleichgewicht. Nach einer anderen, vorteilhaften Lösung wird über die Rohrleitung 50 neben dem Wasser, das ersetzt werden muß, verdünnte Salzsäure, die aus einem dem erfindungsgemäßen Verfahren nachgeschalteten, an sich bekannten weiteren Aufkonzentrierungsprozeß als Rücklaufsäure stammt, zugeführt. Auf die Kopplung des Verfahrens mit diesem Prozeß wird im folgenden näher eingegangen. Die im Auffang- und Lagerbehälter 48 gesammelte, aufkonzentrierte Säure kann entweder direkt weiterverwendet oder sie kann und dies geschieht vorzugsweise, nach einem der bekannten Verfahren zu konzentrierter Säure aufkonzentriert werden. Die Protonen, die zum Bilden der Salzsäure in den Säurekammern 4, 4' benötigt werden, werden in den Anodenkammern 5, 5' an den jeweiligen Wasserstoffverzehranoden 20, 20' aus Wasserstoff gebildet. Der dazu benötigte Wasserstoff wird den Wasserstoffverzehranoden 20, 20' durch die Zuführleitungen 23, 23' mittels der Pumpe 56 über die Rohrleitungen 55, 55', 55'' und den Dreiwegeschieber 57 aus dem Wasserstofftank 30 zugeführt. Als Transportmittel oder Träger für die Protonen dient in den Anodenkammern 5, 5' verdünnte Schwefelsäure, die sich in den Behältern 51 und 51' befindet. Von diesen aus wird sie mittels der Pumpen 52 und 52' durch die Rohrleitungen 53 und 53' und die Einlaßöffnungen 18 und 18' durch die Anodenkammern 5 und 5' gepumpt. Sie gelangt über die Auslaßöffnungen 19, 19' und die Rohrleitungen 54 und 54' in die Behälter 51 und 51' zurück. Statt der zwei in dieser Figur gezeigten Säurekreisläufe mit den zwei Behältern 51 und 51' kann auch ein Kreislauf verwendet werden, in dem die Kammern 5 und 5' aus nur einem hier nicht dargestellten Behälter beschickt werden und in dem die Säure nach dem Durchfließen der Kammern 5, 5' in den einen Behälter zurückfließt. Die an den Wasserstoffverzehranoden 20 und 20' jeweils gebildeten Protonen ersetzen die Protonen, die von der Schwefelsäure über die Kationenaustauschermembranen 17 und 17' in die Säurekammern 4, 4' übergewechselt sind. Dies geschieht gleichzeitig in dem Maße wie an den Kathoden 6 und 6' Hydroxylionen gebildet worden sind.

Das weitere Aufkonzentrieren der durch den Elektrodialyseprozeß erhaltenen Salzsäure zu konzentrierter Salzsäure geschieht in besonders vorteilhafter Weise durch Koppeln des erfindungsgemäßen Verfahrens mit einem an sich bekannten Verfahren. Aus Figur 3 ist das Verfahrensschema ersichtlich. Das elektrodialytische Aufkonzentrieren der Salzsäure wird bei Temperaturen von über 40°C, vorzugsweise im Bereich von 80°C durchgeführt. Die aus der Elektrodialysezelle 1 in den Figuren 2 und 3 austretende oder die in dem Behälter 48 in Figur 2 gesammelte 8o°C heiße Säure, deren Konzentration über der azeotropen Konzentration liegen muß, wird mittels einer Druckhaltevorrichtung 59 oder Drossel 59 in einen Raum 60 entspannt, in dem im Vergleich zu der Rohrleitung vor der Druckhaltevorrichtung 59 ein Unterdruck herrscht. Dieser Unterdruck wird mittels der Pumpe 62 und der Druckregelvorrichtung 61, 61' eingestellt. Vor der Druckhaltevorrichtung 59 befindet sich zweckmäßigerweise eine Heizung 58, die zum Aufheizen der aus der Elektrodialysezelle 1 stammenden Salzsäure dient, falls diese keine genügend hohe Temperatur haben sollte. Im laufenden Betrieb arbeitet das Verfahren jedoch weitgehend autotherm. Der beim Entspannen der Salzsäure in den Behälter 60 verdampfte Teil der Flüssigkeit enthält mehr Chlorwasserstoff als die zum Verdampfen zugeführte Salzsäure. Entsprechend wird nach dem Kondensieren des Säuredampfes in Kühler 63 eine konzentrierte Salzsäure von mindestens 30 Gewichtsprozent HCl in der Säure erhalten, die in Behälter 64 gesammelt wird. Der nicht verdampfte Anteil der Flüssigkeit, der sich im Entspannungsgefäß 60 sammelt, besteht aus verdünnter Salzsäure. Er wird der Elektrodialysezelle 1 mittels der Pumpe 66 zum erneuten Aufkonzentrieren wieder zugeführt. Über den Dreiwegeschieber 65 kann der verdünnten Säure Wasser zugeführt werden, wenn die Zufuhr von Wasser, die stets parallel zum Durchtritt der Ionen durch die Membranen 14 und 17 in Figur 1 stattfindet, nicht ausreicht, um den Flüssigkeitsverlust auszugleichen, der durch das Entnehmen der konzentrierten Salzsäure über Behälter 64 entstanden ist.

Im folgenden wird das Verfahren anhand von Beispielen weiter erläutert:

### Beispiel 1:

Für den im folgenden beschriebenen Versuch wurde eine Elektrodialysezelle verwendet, die folgenden Aufbau hatte:
Kationenaustauschermembran zwischen Kathodenkammer und Salzkammer: Nafion 324, aktive Membranfläche 0,35 m²;
Anionenaustauschermembran zwischen Salzkammer und Salzsäurekammer: ACM von Tokuyama Soda, aktive Membranfläche 0,35 m²;
Kationenaustauschermembran zwischen Salzsäurekammer und Anodenkammer: Nafion 117, aktive Membranfläche 0,35 m²; Kathode: Nickel-Streckmetall, aktiviert;
Wasserstoffverzehranode: Gasdiffusionsanode, Hersteller De Nora;

Es wurde nur eine Elektrodialysezelle verwendet, durch deren Kammer die folgenden Flüssigkeitsströme geleitet wurden:
Kathodenkammer: NaOH, 160 1/Stunde
Salzkammer: NaCl-Lösung, 160 1/Stunde, Konzentration am Einlauf: 20 Gew-% NaCl in der Lösung;
Säurekammer: HCL, 160 1/Stunde;
Anodenkammer: Schwefelsäure, 160 1/Stunde, Konzentration: 15 Gew-% H₂SO₄ in der Säure.

Die Elektrolyten hatten eine Temperatur von 53°C, die elektrische Spannung zwischen Anode und Kathode betrug 3,5 V, der Zellenstrom wurde zu 700 A festgestellt und die spezifische Strombelastung betrug 2 kA/m².
Der Versuch wurde sowohl in der Kathodenkammer als auch in der Salzsäurekammer mit entsalztem Wasser begonnen. Die maximal erreichte Salzsäurekonzentration am Ausgang der Salzsäurekammer betrug 23,5 Gew.-% und die Natronlaugekonzentration am Ausgang der Kathodenkammer 33 Gew.-%. Die maximale Säurekonzentration wird durch die Menge des Wassers bestimmt, die zusammen mit den Protonen durch die Kationenaustauschermembran in den Salzsäurekreislauf übertritt. Membranen mit einer geringeren Permeabilität für Wasser könnten das Herstellen von höher konzentrierten Säuren nach dem erfindungsgemäßen Verfahren ermöglichen.

### Beispiel 2:

Durch dieses Beispiel wird gezeigt wie Salzsäure, die in einer Elektrodialysezelle gemäß Ausführungsbeispiel 1 aufkonzentriert worden ist, mittels eines Entspannungs/Kondensationsverfahrens wie es in Figur 3 beschrieben worden ist; zu konzentrierter Salzsäure aufgearbeitet werden kann. Aus der Elektrodialysezelle, deren Daten in Beispiel 1 angegeben sind, wurde eine 80°C heiße Salzsäure von einer Konzentration von 23,5 Gew.-% in einer Menge von 150 1/Stunde abgezogen, in einer elektrischen Heizvorrichtung auf 84°C erhitzt und sodann durch eine Drossel in einen Kessel entspannt, in dem ein Druck von 0,2 bar absolut herrschte. Bei diesem Vorgang verdampfte ein Teil der Salzsäure. Dieser Salzsäuredampf wurde aus dem Kessel abgezogen und in einem Kühler kondensiert. Die so erhaltene Salzsäure hatte eine Konzentration von 30 Gew.-% HCl bezogen auf die Säure. Es wurden 3,14 kg einer solchen Säure pro Stunde gewonnen. Der nicht verdampfte Teil der Salzsäure, der flüssig in dem Kessel verblieben war, hatte eine Konzentration von 23,4 Gew.-% HCl. Er wurde mit einer Temperatur von 70 bis 72 °C in die Elektrodialysezelle zurückgeleitet. Vor der Elektrodialysezelle wurde dieser abgereicherten Salzsäure als Ersatz für die entnommene Menge konzentrierter Salzsäure 2,2 kg Wasser pro Stunde zugesetzt. In der Zelle wird die Säure durch den elektrolytischen Prozeß wieder erwärmt und aufkonzentriert. Wie zu sehen ist, arbeitet das Verfahren weitgehend autotherm.

Die Versuche zeigen, daß mit dem erfindungsgemäßen Verfahren unter Verwenden der erfindungsgemäßen Elektrodialysezelle in technischem Maßstab Salzsäure mit einer Konzentration von über 20 Gew.-% und Natronlauge mit einer Konzentration von über 30 Gew.-% erzeugt werden kann. Es wird desweiteren gezeigt, daß durch Kopplung des erfinderischen Verfahrens mit einem an sich bekannten Verfahren unter Ausnützung der verfahrensbedingten Erwärmung der elektrodialytisch erzeugten Salzsäure auf einfache und effektive Weise auch konzentrierte Salzsäure hergestellt werden kann.

Das erfindungsgemäße Verfahren ist auch auf andere Salz/Säure/Lauge-Systeme übertragbar.

Die Vorteile der Erfindung sind:
- Es werden reine Säuren und reine Laugen aus den korrespondierenden Salzen hergestellt;
- Das Entladen von Anionen des Säure-Base-Paares an der Anode wird vermieden. Damit besteht z.B. die Möglichkeit, völlig halogenfreie Hologenwasserstoffsäuren, speziell chlorfreie Salzsäure herzustellen;
- Es kann erstmals Salzsäure mit Konzentrationen von über 10 Gew.-% HCl in technischem Maßstab auf elektrodialytischem Wege hergestellt werden.

### Bezugszeichenliste

- 1, 1': Elektrodialysezellen
- 2, 2': Kathodenkammern
- 3,: von Salzlösung durchströmte Kammern oder Salzkammern
- 4, 4': Kammern, in denen Säure gebildet wird, "Säurekammern"
- 5, 5': Anodenkammern (vielfach als "vierte Kammern" bezeichnet
- 6, 6': Kathoden
- 7: Barren für das elektrische Kontaktieren der Kathoden (6, 6')
- 8, 8': Einlauföffnungen für Katholyten
- 9, 9': Auslauföffnungen für Lauge und Wasserstoff
- 10, 10': Trenngefäße für Lauge/Wasserstoff
- 11, 11': Kationenaustauschermembran zwischen Salzkammer (3) und Kathodenkammer (2)
- 12, 12': Einlaßöffnungen für Salzlösung in Salzkammer (3)
- 13, 13': Auslaßöffnungen in Salzkammern (3, 3') für abgereicherte Salzlösungen
- 14, 14': Anionenaustauschermembranen zwischen Salzkammern (3, 3') und Säurekammern (4, 4')
- 15, 15': Einlaßöffnungen für Wasser oder verdünnte Säure in Säurekammern (4, 4')
- 16, 16': Auslaßöffnungen für aufkonzentrierte Säure in Säurekammern (4, 4')
- 17, 17': Kationenaustauschermembranen zwischen Anodenkammern (5, 5') und Säurekammern (4, 4')
- 18, 18': Einlaßöffnungen für Protonensäure in die Anodenkammern (5, 5')
- 19, 19': Auslaßöffnungen für Protonensäure aus Anodenkammern (5, 5')
- 20, 20': Anoden/Wasserstoffverzehranoden
- 21: Kationenaustauschermembran der Wasserstoffverzehranode
- 22: Stromabführungsbarren der Anode (20)
- 23, 23': Zuführungsleitungen der Anoden (20, 20') für Wasserstoff
- 24: verteilerraum für Wasserstoff an der Wasserstoffverzehranode (20)
- 25: Wände der Elektrodialysezelle (1)
- 26: Zwischen- und Pufferbehälter für verdünnte Lauge
- 27: Pumpe zum Fördern von verdünnter Lauge
- 28: Rohrleitung für verdünnte Lauge von Behälter (26) in die Kathodenkammer (2)
- 29: Rohrleitung für Wasserstoff und Lauge von Kathodenkammer (2) in Trennbehälter für Lauge und Wasserstoff (30)
- 29': Rohrleitung für Wasserstoff von Trennbehälter (10) in Behälter für Wasserstoff (30)
- 30: Lager- und Pufferbehälter für Wasserstoff
- 31: Rohrleitung zum Fördern der teilweise aufkonzentrierten Lauge in Kathodenkammer (2')
- 32: Rohrleitung zum Fördern der aufkonzentrierten Lauge und des Wasserstoffs von Kathodenkammer (2') in Trenngefäß (10')
- 32': Rohrleitung für Natronlauge von Trenngefäß (10') in Lagerbehälter (33)
- 33: Auffang- und Lagerbehälter für aufkonzentrierte Lauge
- 34: 3-Wege-Schieber zum Teilen des Stromes der teilweise aufkonzentrierten Lauge
- 35: Rohrleitung für teilweise aufkonzentrierte Lauge von 3-Wege-Schieber (34) in Zwischen- und Pufferbehälter (26)
- 36: Rohrleitung zum Zuführen von Wasser in Zwischen- und Pufferbehälter (26)
- 37: Rohrleitung für Wasserstoff von Trenngefäß (10') in den Vorrats- und Pufferbehälter für Wasserstoff (30)
- 38: Zwischen- und Puffergefäß für Salzlösung
- 39: Pumpe für Salzlösung
- 40, 40': Rohrleitungen von Behälter (38) für Salzlösung in die Salzkammern (3, 3')
- 41, 41', 41'': Rohrleitungen für das Abführen der Salzlösungen aus den Salzkammern (3, 3')
- 42: Zwischen- und Puffergefäß für verdünnte Säure
- 43: Pumpe zum Fördern der verdünnten Säure
- 44: Rohrleitung zum Fördern der Säure in die Säurekammer (4)
- 45: 3-Wege-Schieber für Säure in Rohrleitung (46) zwischen den Säurekammern (4) und (4')
- 46: Rohrleitung für Säure zwischen den Säurekammern (4) und (4')
- 47: Rohrleitung für Säure zwischen Säurekammer (4') und Auffang- und Lagerbehälter (48)
- 48: Auffang- und Lagerbehälter für Säure
- 49: Rohrleitung für teilkonzentrierte Säure zwischen 3-Wege-Schieber (45) und Zwischen- und Puffergefäß (42)
- 50: Rohrleitung für das Zuleiten von Wasser in das Zwischen- und Puffergefäß für Säure (42)
- 51, 51': Behälter für Schwefelsäure
- 52, 52': Pumpen für Schwefelsäure
- 53, 53': Rohrleitungen zwischen Behältern für Schwefelsäure (51, 51') und Anodenkammern (5, 5')
- 54, 54': Rohrleitungen zum Rückführen der Schwefelsäure von den Anodenkammern (5, 5') in die Behälter (51, 51')
- 55, 55' 55'': Rohrleitungen für Wasserstoff von Wasserstofftank (30) zu Anodenkammern (5, 5')
- 56: Pumpe zum Fördern von Wasserstoff von Wasser stofftank (30) zu Wasserstoffverzehranoden (20, 20')
- 57: 3-Wege-Schieber für Wasserstoff
- 58: Heizung für HCl nach Elektrodialysezelle (1 bzw. 1')
- 59: Druckhaltevorrichtung, Drossel
- 60: Entspannungsbehälter und Zwischenbehälter für verdünnte Salzsäure
- 61, 61': Druckregelungsreinrichtung
- 62: Vakuumpumpe
- 63: Kühler, Kondensator
- 64: Auffangbehälter für konzentrierte HCl
- 65: Dreiwegeschieber für das Zuführen von Wasser
- 66: Umwälzpumpe für verdünnte Salzsäure
- 67: Drei-Wege-Schieber zum Teilen der Salzlösung

## Patentansprüche

1. Elektrodialysezelle zur Zerlegung eines in Wasser gelösten, Chlorid-Ionen enthaltenden Salzes in Chlorwasserstoffsäure und die das Kation des Salzes enthaltende Base,
wobei die Zelle folgenden Komponenten aufweist:
• Einrichtungen zum Anlegen einer elektrischen Spannung zwischen Anode und Kathode;
• eine Kathodenkammer (2), in welcher die das Kation des Salzes enthaltende Base gebildet wird, mit einer Kathode (6);
• eine an die Kathodenkammer (2) angrenzende Salzkammer (3), welcher eine wässrige Lösung eines Chlorid-Ionen enthaltenden Salzes zugeführt wird;
• eine an die Salzkammer (3) angrenzende Säurekammer (4), in welcher Chlorwasserstoffsäure mit einer Konzentration von mindestens 10 Gewichtsprozent, bevorzugt mindestens 20 Gewichtsprozent gebildet wird;
• eine an die Säurekammer (4) angrenzende Anodenkammer (5), welcher ein keine Halogenid-Ionen enthaltender wässriger Protonenträger zugeführt wird, mit einer Wasserstoffverzehranode (20) mit einer Wasserstoffzuführung (23);
wobei jede dieser Kammern je eine Einström- und eine Ausströmöffnung aufweist; sowie
• eine Kationenaustauschermembran (11), welche die Kathodenkammer (2) von der angrenzenden Salzkammer (3) trennt;
• eine Anionenaustauschermembran (14), welche die Salzkammer (3) von der angrenzenden Säurekammer (4) trennt;
• eine Kationenaustauschermembran (17), welche die Säurekammer (4) von der angrenzenden Anodenkammer (5) trennt; und
• eine weitere Kationenaustauschermembran (21), welche die aktive Schicht der Wasserstoffverzehranode von der wässrigen Lösung des Protonenträgers in der Anodenkammer (5) trennt.

2. Verfahren zum Zerlegen eines in Wasser gelösten, Chlorid-Ionen enthaltenden Salzes in Chlorwasserstoffsäure mit einer Konzentration von mindestens 10 Gewichtsprozent, bevorzugt 20 Gewichtsprozent und die Kationen des Salzes enthaltende Base durch Elektrodialyse, **dadurch gekennzeichnet, dass** die Elektrodialyse, in einer Elektrodialysezelle (1) gemäß Patentanspruch 1 durchgeführt wird.

3. Verfahren gemäß Patentanspruch 2, **dadurch gekennzeichnet, dass** aus einer wässrigen Lösung von Natriumchlorid Salzsäure mit einer Konzentration oberhalb der Konzentration des azeotropen Gemischs von Wasser und Chlorwasserstoff, sowie Natronlauge erzeugt wird.

4. Verfahren gemäß einem der Patentansprüche 2 oder 3,**dadurch gekennzeichnet, dass** der Anodenkammer (5) der Elektrodialysezelle (1) ein Protonenträger aus der Gruppe verdünnte Schwefelsäure, Orthophosphorsäure, Perchlorsäure zugeführt wird.

5. Verfahren gemäß einem der Patentansprüche 2 bis 4, **dadurch gekennzeichnet, dass** der in der Kathodenkammer (2) an der Kathode (6) gebildete Wasserstoff der Wasserstoffverzehranode (20) zugeführt und dort zu Protonen oxidiert wird.

6. Verfahren gemäß einem der Patentansprüche 2 bis 5, **dadurch gekennzeichnet, dass** es bei einer Temperatur oberhalb von 40°C durchgeführt wird.

7. Verfahren gemäß einem der Patentansprüche 2 bis 6, **dadurch gekennzeichnet, dass** es mit mindestens zwei Elektrodialysezellen (1, 1') in Hintereinanderschaltung durchgeführt wird.

8. Verfahren gemäß einem der Patentansprüche 2 bis 6, **dadurch gekennzeichnet, dass** es mit mindestens zwei Elektrodialysezellen (1) in Parallelschaltung durchgeführt wird.

9. Verfahren gemäß Patentanspruch 3, **dadurch gekennzeichnet, dass** die in der Elektrodialysezelle (1) gebildete Salzsäure, deren Konzentration über dem azeotropen Punkt von Salzsäure liegt, mit mindestens der durch das Verfahren gegebenen Temperatur mittels einer Druckhaltevorrichtung (59) in einem Raum (60) entspannt wird, in dem ein niedrigerer Druck als in und vor der Druckhaltevorrichtung (59) herrscht, so dass ein Teil der Salzsäure verdampft und der Dampf einen höheren Gehalt an Chlorwasserstoff hat, nach dessen Kondensation eine Salzsäure erhalten wird, die eine höhere Konzentration hat als die Salzsäure, welche nach dem elektrodialytischen Anreicherungsprozess erhalten worden ist und der nicht verdampfte Anteil der Salzsäure, der eine herabgesetzte Konzentration an Chlorwasserstoff hat, der Elektrodialysezelle (1) wieder zugeführt wird.

## Claims

1. Electrodialysis cell for decomposing a water dissolved salt containing chloride ions into hydrochloric acid and the base containing the cation of the salt
wherein the cell has the following components :
• devices for applying an electrical voltage between a cathode and an anode;
• a cathode chamber (2) in which the base containing the cation of the salt is formed and which has a cathode (6);
• a salt chamber (3) which adjoins the cathode chamber (2) and which is fed with an aqueous solution of a salt containing chloride ions;
• an acid chamber (4) which adjoins the salt chamber (3) and in which hydrochloric acid with a concentration of at least 10 wt.%, preferably at least 20 wt.%, is formed;
• an anode chamber (5) adjoining the acid chamber (4), which is fed with an aqueous proton carrier containing no halide ions, and which has a hydrogen-depolarised anode (20) and a hydrogen feed (23);
each of these chambers respectively having an inlet opening and an outlet opening; and
• a cation-exchange membrane (11) which separates the cathode chamber (2) from the adjacent salt chamber (3);
• an anion-exchange membrane (14) which separates the salt chamber (3) from the adjacent acid chamber (4);
• a cation-exchange membrane (17) which separates the acid chamber (4) from the adjacent anode chamber (5); and
• a further cation-exchange membrane (21) which separates the active layer of the hydrogen depolarised anode from the aqueous solution of the proton carrier in the anode chamber (5)

2. A method for decomposing a water-dissolved salt containing chloride ions into hydrochloric acid with a concentration of at least 10 wt.%, preferably 20 wt. % and the base containing cations of the salt by electrodialysis, **characterised in that** the electrodialysis is carried out in an electrodialysis cell (1) according to claim 1.

3. A method according to claim 2, **characterised in that** hydrochloric acid, with a concentration above the concentration of the azeotropic mixture of water and hydrogen chloride, and sodium hydroxide are formed from an aqueous solution of sodium chloride.

4. A method according to one of claims 2 and 3, **characterised in that** the anode chamber (5) of the electrodialysis cell (1) is fed with a proton carrier from the group: dilute sulfuric acid, orthophosphoric acid, perchloric acid.

5. A method according to one of claims 2 to 4, **characterised in that** the hydrogen formed at the cathode (6) in the cathode chamber (2) is fed to the hydrogen-depolarised anode (20), where it is oxidised to form protons.

6. A method according to one of claims 2 to 5, **characterised in that** it is carried out at a temperature above 40°C,

7. A method according to one of claims 2 to 6, **characterised in that** it is carried out with at least two electrodialysis cells (1, 1') connected in series.

8. A method according to one of claims 2 to 6, **characterised in that** it is carried out with at least two electrodialysis cells (1) connected in parallel.

9. A method according, to claim 3, **characterised in that** the hydrochloric acid formed in the electrodialysis cell (1), the concentration of which is above the azeotropic point of hydrochloric acid, with at least the temperature provided by the method, is expanded by means of a pressure holding device (59) in a space (60) in which a lower pressure prevails than in and before the pressure holding device (59), so that a part of the hydrochloric acid is evaporated and the vapour has a higher hydrogen chloride content, after the condensation of which a hydrochloric acid is obtained which has a higher concentration than the hydrochloric acid which was obtained after the electrodialytic enrichment process, and the unevaporated part of the hydrochloric acid, which has a reduced hydrogen chloride concentration, is fed back to the electrodialysis cell (1).

## Revendications

1. Cellule d'électrodialyse permettant la décomposition d'un sel dissous dans de l'eau, contenant des ions chlorure, dans de l'acide chlorhydrique et la base contenant le cation du sel, la cellule présentant les composants suivants :
• des dispositifs pour appliquer une tension électrique entre l'anode et la cathode,
• une chambre cathodique (2) dans laquelle est formée la base contenant le cation du sel, avec une cathode (6),
• une chambre à sel (3), adjacente à la chambre cathodique (2), recevant une solution aqueuse d'un sel contenant des ions chlorure,
• une chambre à acide (4), adjacente à la chambre à sel (3), dans laquelle de l'acide chlorhydrique est formé avec une concentration d'au moins 10 % en poids, de préférence au moins 20 % en poids,
• une chambre anodique (5), adjacente à la chambre à acide (4), recevant un support de protons aqueux ne contenant pas d'ions halogénure, ayant une anode consommatrice d'hydrogène (20) reliée à une conduite d'hydrogène (23),
• chacune de ces chambres présentant une ouverture d'arrivée et une ouverture de sortie, ainsi qu'
• une membrane échangeuse de cations (11) qui sépare la chambre cathodique (2) de la chambre à sel adjacente (3),
• une membrane échangeuse d'anions (14) qui sépare la chambre à sel (3) de la chambre à acide adjacente (4),
• une membrane échangeuse de cations (17) qui sépare la chambre à acide (4) de la chambre anodique adjacente (5), et
• une autre membrane échangeuse de cations (21) qui sépare la couche active de l'anode consommatrice d'hydrogène de la solution aqueuse du support de protons dans la chambre anodique (5),

2. Procédé permettant la décomposition d'un sel dissous dans de l'eau, contenant des ions chlorure, dans de l'acide chlorhydrique avec une concentration d'au moins 10 % en poids, de préférence 20 % en poids et la base, contenant les cations du sel, par électrodialyse, **caractérisé en ce qu'** on réalise l'électrodialyse dans une cellule d'électrodialyse (1) selon la revendication 1.

3. Procédé selon la revendication 2,
**caractérisé en ce qu'**
à partir d'une solution aqueuse de chlorure de sodium, on produit de l'acide chlorhydrique avec une concentration supérieure à la concentration du mélange azéotrope d'eau et de chlorure d'hydrogène ainsi que de la lessive de soude.

4. Procédé selon l'une quelconque des revendications 2 ou 3,
**caractérise en ce qu'**
on achemine un support de protons du groupe constitué des acides sulfurique, orthophosphorique, perchlorique dilués, vers la chambre anodique (5) de la cellule d'électrodialyse (1).

5. Procédé selon l'une quelconque des revendications 2 à 4,
**caractérisé en ce qu'**
on achemine l'hydrogène formé dans la chambre cathodique (2) sur la cathode (6) vers l'anode consommatrice d'hydrogène où il oxydé en protons.

6. Procédé selon l'une quelconque des revendications 2 à 5,
**caractérisé en ce qu'**
on le réalise à une température supérieure à 40°C.

7. Procédé selon l'une quelconque des revendications 2 à 6,
**caractérisé en ce qu'**
on le réalise avec au moins deux cellules d'électrodialyse (1, 1') branchées l'une derrière l'autre.

8. Procédé selon l'une quelconque des revendications 2 à 6,
**caractérisé en ce qu'**
on le réalise avec au moins deux cellules d'électrodialyse (1) branchées en parallèle.

9. Procédé selon la revendication 3,
**caractérisé en ce que**
l'acide chlorhydrique forme dans la cellule d'électrodialyse (1) dont la concentration est supérieure au point azéotrope de l'acide chlorhydrique, est détendu au moins à la température donnée par le procédé au moyen d'un dispositif de maintien de la pression (59) dans une chambre (60) dans laquelle règne une pression plus basse que dans ou devant le dispositif de maintien de la pression (59), de sorte qu'une partie de l'acide chlorhydrique est évaporée, et la vapeur a une teneur supérieure en chlorure d'hydrogène, après la condensation duquel on obtient un acide chlorhydrique qui a une concentration plus élevée que l'acide chlorhydrique qui a été obtenu d'après le processus d'enrichissement par électrodialyse, et la fraction de l'acide chlorhydrique non évaporée, qui a une concentration abaissée en chlorure d'hydrogène, est réacheminée vers la cellule d'électrodialyse (1).
